# FASCICULE DE BREVET EUROPEEN

(11) **EP 1 958 512 B1**
(45) Date de publication et mention de la délivrance du brevet: **31.12.2014**
(21) Numéro de dépôt: 08101721.2
(22) Date de dépôt: 18.02.2008
(51) Int. Cl.: A23B 4/005, A22C 25/00, A22C 25/22, A23L 1/325

(54) **Procédé de fabrication de produits alimentaires et chaîne de fabrication correspondante**
Verfahren zur Herstellung von Lebensmitteln und entsprechende Fertigungsstrasse
Process for manufacturing food products and corresponding manufacturing line

(30) Priorité: 16.02.2007 FR 0701159
(43) Date de publication de la demande: 20.08.2008
(73) Titulaire: Fleury Michon, 85700 Pouzauges (FR)
(72) Inventeur: Pineau, Yoann, 85210, La Reorthe (FR)
(74) Mandataire: Bioret, Ludovic

(56) Documents cités:
- JP-A- 58 051 871
- JP-A- 59 173 073
- JP-A- 62 181 759
- JP-A- 63 173 560
- US-A- 4 571 167

## Description

### 1. Domaine de l'invention

Le domaine de l'invention est celui de la fabrication de produits frais prêts à être consommés, en particulier à base de surimi.

### 2. Solutions de l'art antérieur

Certains produits alimentaires sont vendus prêts à être consommés, de façon à ce que le consommateur n'ait aucune étape de préparation à effectuer. Parmi ces produits, on connaît notamment les bâtonnets de surimi qui sont destinés à être consommés frais, notamment en apéritif ou en entrée.

Ces bâtonnets sont fabriqués à partir d'une pâte qui est ordinairement constituée de chair de poisson broyée, d'eau, de fécule, d'amidon, d'arômes, de sel et de colorants.

Cette pâte est classiquement étalée et précuite sous la forme d'une bande d'environ 1 à 2 mm d'épaisseur qui est par la suite scarifiée puis enroulée afin de former un bâtonnet de surimi. Un tel bâtonnet mesure généralement entre 5 et 10 cm de longueur et présente un diamètre d'environ 1 à 3 cm. Après l'enroulement, les bâtonnets subissent une nouvelle cuisson, lors d'une phase de pasteurisation.

Les bâtonnets de surimi peuvent être consommés seuls ou avec un accompagnement. Il est ainsi classique de les consommer en trempant l'extrémité dans une sauce, par exemple de la sauce mayonnaise, avant de les manger. Ces sauces permettent de varier les goûts de ces bâtonnets de surimi.

Les bâtonnets de surimi restent cependant un produit classique et peu varié. En effet, les variantes proposées jusqu'à maintenant consistent en des variations de taille et de format des produits, et ne permettent pas de création de goûts nouveaux.

Il existe donc un besoin de raffiner les produits de surimi classiques, afin de proposer au consommateur une offre plus variée et plus diversifiée. Il est également souhaitable de conserver une présentation, ou une image, lui rappelant les classiques bâtonnets de surimi. Pour cela, des bâtonnets de surimi fourrés ont été développés. Le document JP 63173560 présente ainsi un bâtonnet de surimi fourré fabriqué en disposant un fourrage sur un rectangle de surimi, puis en enroulant celui-ci. La fabrication de tels produits engendre cependant de nouvelles difficultés, distinctes de celles liées à la fabrication de surimi classique.

Il existe en effet un risque que le fourrage, ou produit de fourrage, disposé dans les bâtonnets déborde par les extrémités de ceux-ci. Une fois les bâtonnets disposés dans une barquette et conditionnés, un tel débordement peut entraîner une salissure des barquettes en plastique par du fourrage, ce qui dégrade considérablement l'aspect visuel du produit fini.

Les exigences de l'industrie agroalimentaire destinée au grand public, et notamment l'exigence d'un aspect visuel parfait du produit, rendent donc un tel débordement inacceptable.

### 3. Objectifs de l'invention

L'invention a notamment pour objectif de pallier ces inconvénients de l'art antérieur.

Plus précisément, un objectif de l'invention est de fournir des bâtonnets de surimi fourrés permettant d'obtenir de nouveaux goûts ou combinaison de goûts.

Un objectif particulier de l'invention est de fournir un procédé permettant la fabrication industrielle de tels bâtonnets de surimi fourrés.

Plus précisément, un objectif de l'invention est de fournir un procédé de fabrication industrielle de bâtonnets fourrés permettant de limiter le risque de débordements du produit de fourrage.

### 4. Résumé de l'invention

Ces objectifs, ainsi que d'autres qui apparaîtront par la suite, sont atteints à l'aide d'un procédé de fabrication de produits alimentaires à base de surimi, selon la revendication 1 ainsi qu'une chaîne de fabrication selon la revendication 7. Le procédé, comprenant, selon l'invention, les étapes suivantes : obtention d'une bande de surimi, dépôt d'un produit de fourrage au voisinage d'un bord de ladite bande de surimi, enroulement de ladite bande de surimi autour dudit produit de fourrage afin de former un rouleau de surimi fourré, découpe du rouleau pour former des bâtonnets de surimi fourrés, emballage du rouleau de surimi fourré dans un film plastique formant un fourreau autour dudit rouleau, et découpe du rouleau pour former des bâtonnets de surimi fourrés, dans lequel, selon l'invention, lors desdites étapes d'emballage et de découpe dudit rouleau de surimi fourré, le rouleau est étiré de façon à allonger sa longueur d'environ 10%.

Ce procédé permet ainsi la fabrication facile et efficace de bâtonnet ayant un coeur de fourrage entouré de surimi, permettant d'offrir de nouveaux goûts, plus variés, au consommateur. Les bâtonnets fourrés, sont, une fois découpés, déjà emballés dans un film plastique. Cet emballage est beaucoup plus aisé à mettre en oeuvre qu'un emballage individuel de chacun des bâtonnets.

De plus, du fait qu'il est découpé alors qu'il est étiré, le bâtonnet aura tendance, après sa découpe, à se rétracter par rapport au film plastique qui l'entoure, qui lui n'est étiré à aucun moment. De cette façon, un dépassement du film plastique par rapport au bâtonnet se forme aux deux extrémités de celui-ci, ce qui permet d'éviter que l'extrémité du bâtonnet soit en contact direct avec la barquette dans laquelle il est conditionné par la suite.

Selon un mode de réalisation particulièrement avantageux de l'invention, ladite étape d'emballage dudit rouleau de surimi fourré dans un film plastique comprend une étape de disposition d'une bande de film plastique autour dudit rouleau et une étape de soudage dudit film au-dessus dudit rouleau, ledit soudage étant effectué à une distance d'au moins 3 mm au-dessus dudit rouleau.

Le fait que le soudage soit effectué plus de 3 mm au-dessus du rouleau fourré, ce qui est tout à fait contraire à la pratique habituelle dans le domaine du surimi, permet que le bâtonnet fourré puisse se dilater librement lors des chauffages postérieurs, ce qui évite un débordement du fourrage par les extrémités du bâtonnet.

Selon un mode de réalisation avantageux, l'étape de découpe dudit rouleau de surimi fourré est effectuée par une lame formant un angle sensiblement perpendiculaire avec sa direction de déplacement.

Une telle découpe a pour effet de refouler le fourrage dans les bâtonnets, en l'éloignant des bords de ceux-ci.

Préférentiellement, l'étape de dépôt d'un produit de fourrage sur un bord de ladite bande de surimi est effectuée grâce à une pompe à débit constant.

Préférentiellement, le procédé comprend également une étape de pasteurisation desdits bâtonnets fourrés.

Cette étape peut également permettre d'achever la cuisson des bâtonnets.

De façon préférentielle, ledit produit de fourrage comporte du fromage.

Cependant, de nombreuses autres combinaisons de goûts peuvent être imaginées.

L'invention porte également sur un bâtonnet de surimi fourré obtenu par le procédé décrit ci-dessus, ainsi que sur une chaîne de fabrication de bâtonnets de surimi fourré, comportant un convoyeur destiné à amener une bande de surimi, une pompe à débit constant permettant le dépôt de fourrage sur le bord de ladite bande de surimi, un mécanisme d'enroulement de ladite bande de surimi autour dudit fourrage, un mécanisme d'emballage dudit rouleau de surimi fourré dans un film plastique formant un fourreau autour dudit rouleau et un mécanisme de découpe dudit rouleau de surimi fourré, et des moyens permettant d'étirer ledit rouleau de surimi fourré de façon à allonger sa longueur d'environ 10% lors des étapes d'emballage et de découpe.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 est une vue simplifiée d'une partie d'une chaîne de fabrication de bâtonnets de surimi fourré selon l'invention ;
- la figure 2 est une vue simplifiée d'une autre partie d'une chaîne de fabrication de bâtonnets de surimi fourré selon l'invention ;
- les figures 3a et 3b représentent un bâtonnet de surimi fourré réalisé selon l'invention ;
- la figure 4 représente de façon schématique les étapes du procédé de fabrication selon l'invention.

### 6. Description détaillée de l'invention

### 6.1 Rappel du principe de l'invention

Le principe de l'invention consiste à fabriquer des bâtonnets de surimi fourrés en déposant du fourrage sur la bande de surimi au moment de l'enroulement de celle-ci. L'enroulement se fait alors autour du fourrage, qui se trouve au coeur du bâtonnet de bande de surimi enroulé.

### 6.2 Fabrication du surimi

La fabrication de la bande de surimi peut être identique à celle d'une bande utilisée pour faire des bâtonnets de surimi classiques. Le procédé de fabrication de cette bande est bien connu de l'homme du métier. Il consiste principalement à étaler de façon continue de la pâte de surimi sur une plaque de pré-cuisson, de façon à produire une bande d'environ 1 à 2 mm d'épaisseur et d'une largeur d'environ 13 cm par exemple. Cette bande, une fois précuite, est refroidie et scarifiée avant d'être enroulée.

### 6.3 L'enroulement

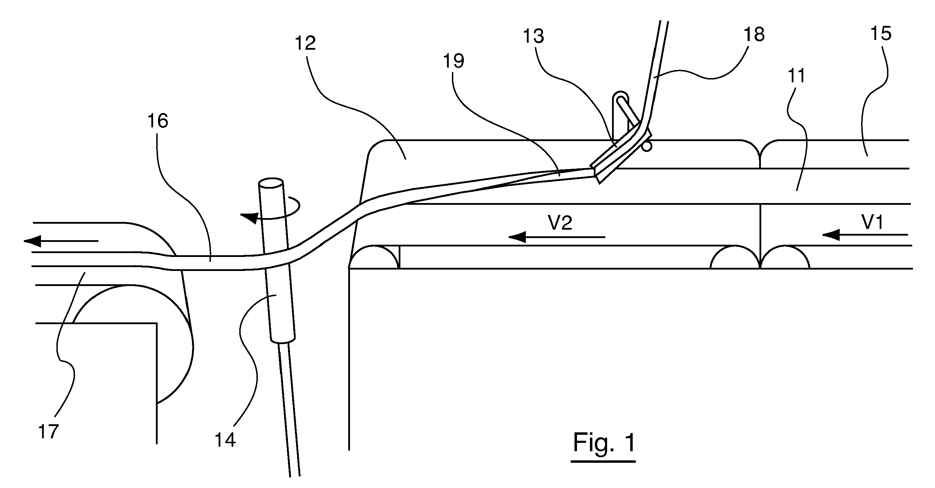

La figure 1 représente une vue simplifiée de la partie d'une chaîne de fabrication de bâtonnets de surimi fourré permettant l'enroulement de la bande de surimi. La bande de surimi 11 est enroulée en continu grâce à un système d'enroulement comportant un tapis d'enroulement 12, une languette de maintien 13 et un rouleau d'écartement 14.

La bande de surimi 11, qui a été auparavant refroidie et scarifiée, est acheminée vers le poste d'enroulement par un premier tapis (ou tapis convoyeur, ou convoyeur) 15, puis passe sur le tapis (ou tapis convoyeur, ou convoyeur) d'enroulement 12 dont la vitesse, représentée sur la figure 1 par la flèche V2, est légèrement supérieure (par exemple 10 à 20% plus rapide) à celle du premier tapis, représentée sur la figure 1 par la flèche V1. A titre d'exemple, la vitesse V1 du premier tapis 15 peut être d'environ 10 m/min, et la vitesse V2 du tapis d'enroulement 12 d'environ 11,5 m/min.

Du fait de cette augmentation de vitesse, la bande de surimi 11 est légèrement étirée sur le tapis d'enroulement 12. Une languette d'enroulement 13 maintient en place un bord de la bande de surimi sur le tapis d'enroulement. Derrière le tapis d'enroulement, un rouleau d'écartement 14 sensiblement vertical (perpendiculaire au plan défini par le tapis d'enroulement 12) force la bande 11 à se décaler sur le côté opposé au bord de la bande 11 maintenu par la languette d'enroulement 13. Entre la languette d'enroulement 13 et le rouleau d'écartement 14, la bande a alors tendance à s'enrouler naturellement sur elle-même. Elle forme alors un rouleau 16 qui est convoyé sur un tapis intermédiaire 17.

Pour réaliser les bâtonnets de surimi fourrés de l'invention, le fourrage peut être assuré par un tuyau d'arrivée 18 du produit de fourrage disposé sur la languette d'enroulement 13. Ce tuyau 18 peut déposer en continu du fourrage 19, ou produit de fourrage, sur le bord de la bande de surimi 11 juste avant que celle-ci s'enroule. Le fourrage 19 est ainsi enroulé au coeur du rouleau de surimi 16.

### 6.4 Le fourrage

Plusieurs produits peuvent être utilisés comme fourrage. Selon un mode de réalisation préféré de l'invention, le fourrage mis en oeuvre dans le surimi comprend du fromage au lait pasteurisé. Il est cependant possible d'imaginer facilement de nombreuses autres possibilités de fourrage, par exemple des sauces au paprika, au curry, des préparations de guacamole, etc. Le dépôt et le dosage en continu du fourrage 19 sur la bande de surimi 11 nécessite une pompe à débit constant pour alimenter en fourrage le tuyau d'arrivée 18.

### 6.5 Mise en papillote et découpe

Après son enroulement, le rouleau 16 de surimi fourré est convoyé par un tapis intermédiaire 17 vers un mécanisme qui dispose autour du rouleau 16 un film plastique et qui le soude afin de former une papillote, ou un fourreau, autour du rouleau 16. Par la suite, le rouleau est découpé pour former des bâtonnets d'environ 5 à 10 cm de longueur.

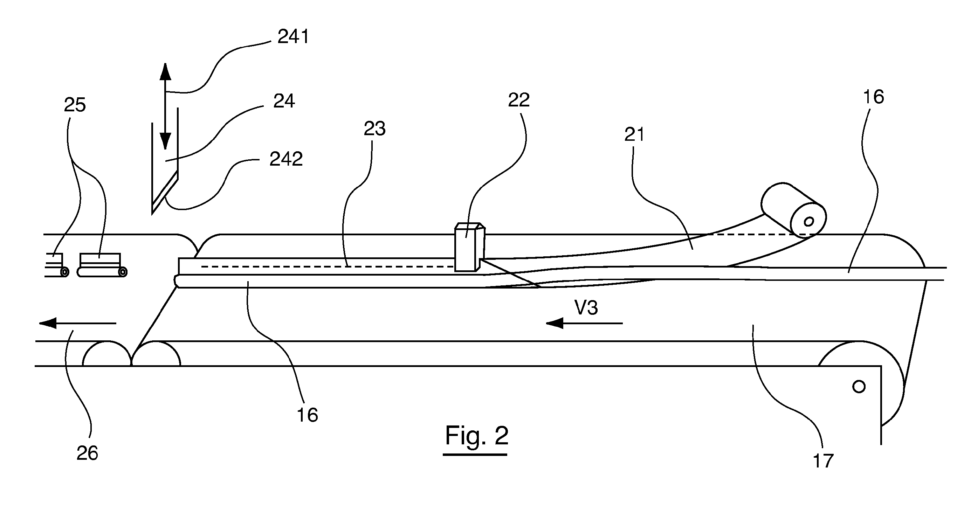

La figure 2 est une vue simplifiée de la partie de la chaîne de fabrication de bâtonnets de surimi fourré permettant l'enveloppement et le découpage du rouleau de surimi fourré 16.

### 6.6 Paramètres particuliers d'emballage et de découpe

Un aspect particulièrement important de l'invention réside dans les paramètres de l'enveloppement et du soudage du film plastique et de la découpe du rouleau de surimi fourré afin de former des bâtonnets. En effet, les bâtonnets fourrés présentent une problématique particulière, qui est absente dans les bâtonnets de surimi classiques.

Il existe en effet un risque que le fourrage, ou produit de fourrage, disposé au coeur des bâtonnets déborde par les extrémités de ceux-ci. Une fois les bâtonnets disposés dans une barquette et conditionnés, un tel débordement peut entraîner une salissure des barquettes en plastique par du fourrage, ce qui dégrade considérablement l'aspect visuel du produit fini.

Les exigences de l'industrie agroalimentaire destinée au grand public, et notamment l'exigence d'un aspect visuel parfait du produit, rendent donc un tel débordement inacceptable. Un objectif particulier de l'invention est donc de fournir un procédé de fabrication industrielle de bâtonnets fourrés permettant de limiter le risque de tels débordements du fourrage.

Il est à noter que cette problématique s'applique aux bâtonnets de surimi fourrés réalisés selon le procédé décrit ci-dessus mais peut également s'appliquer à d'autres bâtonnets fourrés, que le fourrage soit disposé au coeur du bâtonnet ou qu'il soit enroulé avec la bande qui le contient. Il peut également s'appliquer à des bâtonnets fourrés dans lesquels la bande enroulée pour constituer le bâtonnet est composée d'un autre produit que du surimi. Ce procédé d'optimisation destiné à éviter le débordement du fourrage peut donc être mis en oeuvre indépendamment du procédé de fourrage de bâtonnets de surimi fourrés présenté ci-dessus.

Pour éviter le débordement du fourrage, les inventeurs ont trouvé la solution d'agir sur les paramètres de découpe du rouleau fourré ainsi que de modifier la papillote formée par le film plastique enroulé autour du rouleau. L'invention propose donc un nouveau type de produit, à savoir les bâtonnets de surimi fourrés, ainsi que, selon un mode de réalisation avantageux, plusieurs solutions non évidentes, allant à l'encontre des a priori de l'homme du métier spécialisé dans le domaine des bâtonnets de surimi, et décrites ci-après.

L'invention propose une mise en papillote lâche du rouleau fourré, une modification de l'angle d'attaque de la lame coupant les bâtonnets, et un étirement du rouleau fourré lorsqu'il est mis en papillote et découpé.

Chacune de ces modifications du procédé de découpe et d'emballage permet par lui-même une amélioration permettant d'éviter le débordement du fourrage. Cependant, il existe également une synergie entre ces paramètres permettant d'obtenir un bâtonnet dans lequel le risque de débordement du fourrage est considérablement réduit.

### Paramètres de la mise en papillote

Lors de la mise en papillote, ou emballage, un film plastique 21 est disposé autour du rouleau fourré 16, et est soudé au-dessus de ce rouleau par un soudeur thermique 22 pour former un fourreau, ou une papillote, qui maintient le bâtonnet.

Après leur découpe et leur conditionnement dans des barquettes, les bâtonnets sont pasteurisés à une température d'environ 90° pendant 70 à 90 minutes. Lors de cette étape de pasteurisation, le volume des bâtonnets augmente légèrement sous l'effet de la chaleur. Si la papillote est trop serrée autour du bâtonnet, cette expansion a pour effet de comprimer le fourrage au coeur du bâtonnet, ce qui entraîne un écoulement du fourrage par les extrémités des bâtonnets.

Pour éviter cet inconvénient, le soudage du film plastique 21 pour former la papillote se fait à une distance d'au moins 3 mm au-dessus du bâtonnet, ce qui est beaucoup plus important que ce qui se pratique dans l'art antérieur.

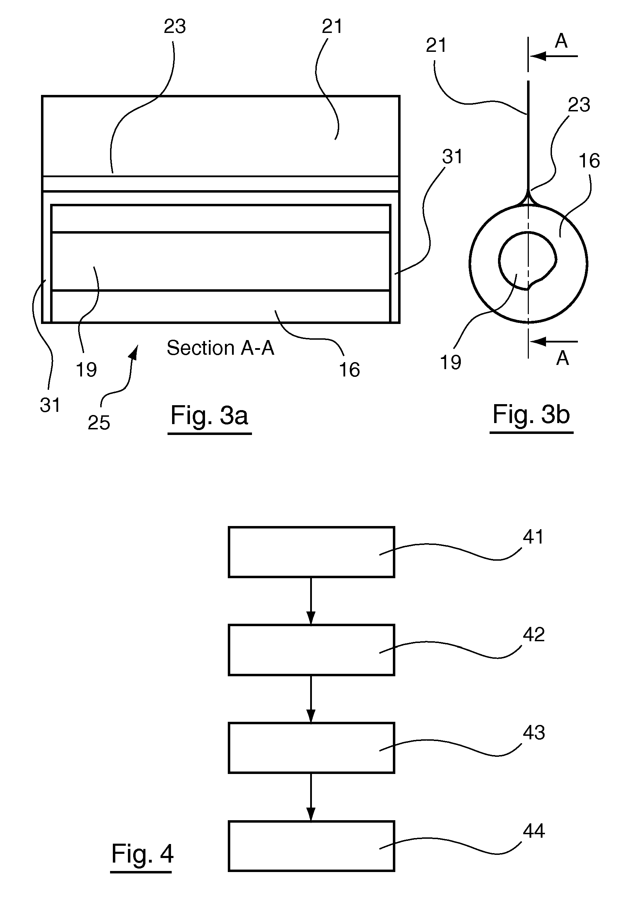

Ainsi, le bâtonnet peut se dilater librement lors de sa pasteurisation, sans que cela entraîne de débordement du fourrage par ses extrémités. Ce décalage du trait de soudure 23 par rapport au rouleau 16 est visible notamment sur la figure 3, qui représente un bâtonnet fourré réalisé selon l'invention.

### Coupe par guillotine

Pour obtenir une découpe plus nette des bâtonnets de surimi, le procédé généralement utilisé est une lame ayant un angle d'attaque d'environ 45°, ou une lame effectuant un mouvement tranchant. Une telle découpe permet en effet un état de surface net aux extrémités des bâtonnets.

Dans le cas du surimi fourré, les inventeurs ont constaté qu'une découpe par « guillotine », dans laquelle une lame agit de façon sensiblement verticale avec un angle d'attaque nul, a pour effet de refouler le fourrage à l'intérieur du bâtonnet. Ainsi, ce refoulement contribue à éviter que le fourrage ne déborde du bâtonnet par la suite. En d'autres termes, la lame forme un angle sensiblement perpendiculaire avec sa direction de déplacement.

Le mécanisme de découpe est représenté schématiquement sur la figure 2. On peut ainsi voir la lame 24, qui effectue un mouvement de va et vient vertical représenté par la flèche 241 pour couper le rouleau fourré 16. Les bâtonnets fourrés 25 sont convoyés, après leur découpe, par le tapis 26. Le bord d'attaque 242 de la lame 24 est sensiblement perpendiculaire à la direction du mouvement de la lame 24, c'est-à-dire sensiblement horizontal.

Il est à noter que l'utilisation d'une découpe de ce type va à l'encontre des a priori de l'homme de métier, selon lequel une découpe des bâtonnets de surimi « classiques » avec une lame ayant un angle d'attaque nul a pour action de détériorer les extrémités du bâtonnet et ne permet donc pas de produire des bâtonnets de surimi ayant un aspect acceptable.

Bien qu'une telle découpe ait déjà été envisagée pour des bâtonnets de surimi, elle est nouvelle et inventive pour la découpe des bâtonnets de surimi fourrés. Elle permet, de façon surprenante, d'obtenir un résultat de coupe de bonne qualité, alors que l'homme du métier considérait qu'il ne fallait pas utiliser cette approche pour découper du surimi.

### La rétractation

Selon une technique particulière de l'invention, le rouleau de surimi fourré est mis en papillote, est découpé alors qu'il subit un étirement d'environ 10% de sa longueur.

Cet étirement est mis en oeuvre grâce à un différence de vitesse entre les tapis de convoyage. Ainsi, le premier tapis 15, représenté sur la figure 1, a une vitesse V1 d'environ 10 m/min. La bande de surimi 11 n'est pas étirée sur ce tapis. Le tapis d'enroulement V2 a une vitesse d'environ 11,6 m/min. La bande 11, passant sur ce tapis, est alors tenue et étirée. Cet étirement est utile pour favoriser l'enroulement.

De façon classique, après son enroulement, le rouleau devrait passer directement sur un tapis ayant la même vitesse V1 que le premier tapis, ou une vitesse proche, afin d'être détendu.

Selon l'invention, et contrairement à cette pratique de l'art antérieur, le tapis intermédiaire 17, qui reçoit le rouleau de surimi fourré après son enroulement, a une vitesse V3 sensiblement supérieure à la vitesse V1 du premier tapis. Avantageusement, il a une vitesse supérieure d'environ 10% à V1, ce qui cause pour la bande de surimi fourré un allongement d'environ 10% par rapport à la longueur qu'il aurait s'il était détendu. La vitesse du tapis intermédiaire 17 V3 est ainsi, dans le mode de réalisation présenté, d'environ 11 m/min.

Le rouleau de surimi fourré est donc étiré quand il est mis en papillote et au moment de sa découpe, de telle façon que sa longueur est augmentée d'environ 10% par rapport à la longueur qu'il aurait s'il n'était soumis à aucune action. Les bâtonnets issus de ce rouleau auront alors tendance à se rétracter après leur découpe. Il ne sont en effet, après sa découpe, plus soumis à la même tension. La papillote, ou film plastique 21, qui n'est étirée à aucun moment, n'aura au contraire pas cette tendance à se rétracter. Ainsi, chaque bâtonnet de surimi fourré se rétractera par rapport à la papillote 21 qui l'entoure après sa découpe, de telle façon que la papillote dépasse d'environ 2mm de chaque côté du bâtonnet. Ce dépassement 31 de la papillote par rapport au bâtonnet qu'elle contient est visible sur la figure 3.

Il est à noter que ce procédé va à l'encontre des a priori de l'homme du métier du surimi. En effet, un tel dépassement de la papillote par rapport au bâtonnet constituerait, pour un bâtonnet de surimi classique, une anomalie inesthétique.

Dans le cas de la papillote fourrée de l'invention, un tel dépassement de la papillote 21 par rapport au bâtonnet 25 permet de faire en sorte que, quand les bâtonnets 25 sont conditionnés dans une barquette, les extrémités des bâtonnets ne touchent pas les flancs de la barquette.

Ainsi, seule la papillote 21, qui est propre, se trouve au contact des flancs de la barquette. Le risque est donc considérablement réduit que le fourrage 19 contenu dans le bâtonnet fourré 25 vienne tâcher les flancs de la barquette.

### 6.7 Conditionnement et pasteurisation

Après la découpe des bâtonnets fourrés, ceux-ci sont conditionnés dans des barquettes qui sont scellées. Les barquettes sont ensuite chauffées à une température comprise entre 80 et 90° C pendant une durée comprise entre 70 et 90 min. afin de pasteuriser les bâtonnets et d'achever leur cuisson. Après refroidissement, les barquettes sont alors prêtes à être vendues.

### 6.8 Etapes du procédé de fabrication

La figure 4 représente de façon schématique les étapes principales du procédé de fabrication selon l'invention. Ainsi, ou peut voir l'étape 41 d'obtention d'une bande de surimi, l'étape 42 de dépôt du produit de fourrage autour de cette bande de surimi, l'étape 42 d'enroulement de cette bande de surimi autour du produit de fourrage, et l'étape 44 de découpe du rouleau ainsi obtenu pour former des bâtonnets de surimi fourrés.

## Revendications

1. Procédé de fabrication de produits alimentaires à base de surimi, comprenant les étapes suivantes :
- obtention d'une bande de surimi (11) ;
- dépôt d'un produit de fourrage (19) au voisinage d'un bord de ladite bande de surimi (11) ;
- enroulement de ladite bande de surimi (11) autour dudit produit de fourrage (19) afin de former un rouleau (16) de surimi fourré ;
- emballage dudit rouleau (16) de surimi fourré dans un film plastique (21) formant un fourreau autour dudit rouleau (16) ;
- découpe dudit rouleau (16) pour former des bâtonnets (25) de surimi fourrés.
**caractérisé en ce que**, lors desdites étapes d'emballage et de découpe dudit rouleau (16) de surimi fourré, ledit rouleau (16) est étiré de façon à allonger sa longueur d'environ 10%.

2. Procédé selon la revendication 1 **caractérisé en ce que** ladite étape d'emballage dudit rouleau (16) de surimi fourré dans un film plastique (21) comprend une étape de disposition d'une bande de film plastique (21) autour dudit rouleau (16) et une étape de soudage dudit film (21) au-dessus dudit rouleau, ledit soudage étant effectué à une distance d'au moins 3 mm au-dessus dudit rouleau(16).

3. Procédé selon l'une quelconque des revendications 1 et 2, **caractérisé en ce que** ladite étape de découpe dudit rouleau (16) de surimi fourré est effectuée par une lame (24) formant un angle sensiblement perpendiculaire avec sa direction de déplacement.

4. Procédé selon l'une quelconque des revendications 1 à 3, **caractérisé en ce que** ladite étape de dépôt d'un produit de fourrage (19) sur un bord de ladite bande (11) de surimi est effectuée grâce à une pompe à débit constant.

5. Procédé selon l'une quelconque des revendications 1 à 4, **caractérisé en ce qu'**il comprend une étape de pasteurisation desdits bâtonnets fourrés.

6. Procédé selon l'une quelconque des revendications 1 à 5, **caractérisé en ce que** ledit produit de fourrage (19) comporte du fromage.

7. Chaîne de fabrication de bâtonnets de surimi fourré, comportant un convoyeur (15) destiné à amener une bande de surimi (11), une pompe à débit constant permettant le dépôt de produit de fourrage (19) sur le bord de ladite bande (11) de surimi, un mécanisme d'enroulement de ladite bande (11) de surimi autour dudit produit de fourrage (19), un mécanisme d'emballage du rouleau (16) de surimi fourré ainsi formé dans un film plastique (21) formant un fourreau autour dudit rouleau (16) de surimi fourré et un mécanisme de découpe dudit rouleau (16) de surimi fourré,
**caractérisé en ce qu'**il comprend des moyens permettant d'étirer ledit rouleau (16) de surimi fourré de façon à allonger sa longueur d'environ 10% lors des étapes d'emballage et de découpe.

## Patentansprüche

1. Verfahren zur Herstellung von Nahrungsmitteln auf Basis von Surimi, umfassend die folgenden Schritte:
- Herstellen eines Surimi-Streifens (11);
- Legen eines Füllproduktes (19) neben einen Rand des Surimi-Streifens (11);
- Wickeln des Surimi-Streifens (11) um das Füllprodukt (19), um eine gefüllte Surimi-Rolle (16) zu bilden;
- Verpacken der gefüllten Surimi-Rolle (16) in eine Kunststofffolie (21), die eine Hülle um die Rolle (16) bildet;
- Schneiden der Rolle (16) zum Bilden gefüllter Surimi-Stäbchen (25),
**dadurch gekennzeichnet, dass** während der Schritte des Verpackens und Schneidens der gefüllten Surimi-Rolle (16) die Rolle (16) derart ausgezogen wird, dass ihre Länge um ungefähr 10 % erhöht wird.

2. Verfahren nach Anspruch 1, **dadurch gekennzeichnet, dass** der Schritt des Verpackens der gefüllten Surimi-Rolle (16) in einer Kunststofffolie (21) einen Schritt des Anbringens eines Kunststofffolienstreifens (21) um die Rolle (16) herum und einen Schritt des Verschweißens der Folie (21) über der Rolle umfasst, wobei das Schweißen in einem Abstand von mindestens 3 mm über der Rolle (16) erfolgt.

3. Verfahren nach einem der Ansprüche 1 und 2, **dadurch gekennzeichnet, dass** der Schritt des Schneidens der gefüllten Surimi-Rolle (16) mittels einer Klinge (24) erfolgt, die einen im Wesentlichen rechten Winkel mit ihrer Bewegungsrichtung bildet.

4. Verfahren nach einem der Ansprüche 1 bis 3, **dadurch gekennzeichnet, dass** der Schritt des Legens eines Füllproduktes (19) auf einen Rand des Surimi-Streifens (11) durch eine Pumpe mit konstanter Durchsatzmenge erfolgt.

5. Verfahren nach einem der Ansprüche 1 bis 4, **dadurch gekennzeichnet, dass** es einen Schritt der Pasteurisierung der gefüllten Stäbchen umfasst.

6. Verfahren nach einem der Ansprüche 1 bis 5, **dadurch gekennzeichnet, dass** das Füllprodukt (19) Käse enthält.

7. Herstellungskette von gefüllten Surimi-Stäbchen, umfassend einen Förderer (15), der dazu bestimmt ist, einen Surimi-Streifen (11) bereitzustellen, eine Pumpe mit konstanter Durchsatzmenge, die das Legen eines Füllproduktes (19) auf den Rand des Surimi-Streifens (11) ermöglicht, einen Mechanismus zum Wickeln des Streifens (11) um das Füllprodukt (19), einen Mechanismus zum Verpacken der so geformten gefüllten Surimi-Rolle (16) in eine Kunststofffolie (21), die eine Hülle um die gefüllte Surimi-Rolle (16) bildet, und einen Mechanismus zum Schneiden der gefüllten Surimi-Rolle (16), **dadurch gekennzeichnet, dass** sie Mittel umfasst, die es ermöglichen, die gefüllte Surimi-Rolle (16) auszuziehen, um ihre Länge um ungefähr 10 % während der Schritte des Verpackens und des Schneidens zu verlängern.

## Claims

1. Method for production of foodstuffs based on surimi, comprising the following steps:
- obtaining a strip of surimi (11);
- depositing a filling product (19) in the vicinity of an edge of the said strip of surimi (11);
- rolling the said strip of surimi (11) around the said filling product (19) in order to form a roll (16) of filled surimi;
- packing the said roll (16) of filled surimi in a plastic film (21) to form a sheath around the said roll (16);
- cutting the said roll (16) in order to form sticks (25) of filled surimi,
**characterised in that**, during the said steps of packing and cutting the said roll (16) of filled surimi, the said roll (16) is stretched such that its length is extended by approximately 10%.

2. Method according to claim 1, **characterised in that** the said step of packing the said roll (16) of filled surimi in a plastic film (21) comprises a step of placing a strip of plastic film (21) around the said roll (16), and a step of welding the said film (21) above the said roll, the said welding being carried out at a distance of at least 3 mm above the said roll (16).

3. Method according to either of claims 1 and 2, **characterised in that** the said step of cutting the said roll (16) of filled surimi is carried out by a blade (24) which forms an angle which is substantially perpendicular to the direction of displacement of the roll.

4. Method according to any one of claims 1 to 3, **characterised in that** the said step of depositing a filling product (19) on an edge of the said strip (11) of surimi is carried out by means of a pump with constant delivery.

5. Method according to any one of claims 1 to 4, **characterised in that** it comprises a step of pasteurisation of the said filled sticks.

6. Method according to any one of claims 1 to 5, **characterised in that** the said filling product (19) comprises cheese.

7. Assembly line for sticks of filled surimi, comprising a conveyor (15) which is designed to convey a strip of surimi (11), a pump with constant delivery which makes it possible to deposit filling product (19) on the edge of the said strip of surimi (11), a mechanism for winding the said strip of surimi (11) around the said filling product (19), a mechanism for packing the roll (16) of filled surimi thus formed in a plastic film (21) which forms a sheath around the said roll (16) of filled surimi, and a mechanism for cutting the said roll (16) of filled surimi, **characterised in that** it comprises means which make it possible to stretch the said roll (16) of filled surimi such as to extend its length by approximately 10% during the steps of packing and cutting.
